# EUROPÄISCHE PATENTSCHRIFT

(11) **EP 3 756 943 B1**
(45) Veröffentlichungstag und Bekanntmachung des Hinweises auf die Patenterteilung: **10.07.2024**
(21) Anmeldenummer: 20182476.0
(22) Anmeldetag: 26.06.2020
(51) Int. Cl.: B60R 7/04

(54) **VORRICHTUNG ZUR FIXIERUNG EINES GEGENSTANDES**
DEVICE FOR FIXING AN OBJECT
DISPOSITIF DE FIXATION D'UN OBJET

(30) Priorität: 27.06.2019 AT 5010819 U
(43) Veröffentlichungstag der Anmeldung: 30.12.2020
(73) Patentinhaber: TRUPE Engineering GmbH, 8324 Kirchberg an der Raab (AT)
(72) Erfinder: TRUMMER, Peter, 8341 Paldau (AT)
(74) Vertreter: Wirnsberger & Lerchbaum Patentanwälte OG

(56) Entgegenhaltungen:
- EP-A1- 3 315 353
- EP-A1- 3 387 900
- DE-A1- 102011 008 624
- DE-A1- 19 739 179
- DE-U1- 202015 100 327
- ES-U- 1 131 855
- FR-A1- 2 878 798
- US-A1- 2009 008 420

## Beschreibung

Die Erfindung betrifft eine Vorrichtung zur Fixierung eines Gegenstandes, gemäß dem Oberbegriff des unabhängigen Anspruchs 1.

Gemäß dem Stand der Technik sind verschiedene Vorrichtungen zur Fixierung von Kindersitzen oder sonstigen Transportbehältnissen mit ISOFIX-Adaptern als Befestigungselemente bekannt. Um eine Befestigung der zu transportierenden Kindersitze oder des Transportbehältnisses zu ermöglichen, sind die Befestigungselemente gemäß dem Stand der Technik entweder direkt am zu befestigenden Gegenstand oder über einen separaten Grundrahmenträger, welcher zwischen einem Fahrzeugsitz und dem zu befestigenden Gegenstand anordenbar ist, befestigt. Aus dem Stand der Technik bekannte Befestigungssysteme haben einen hohen Platzbedarf und sind unflexibel in einer Anwendung. Darüber hinaus erweisen sich die Grundrahmenträger aus dem Stand der Technik als unhandlich sowohl bei einer Montage am zu befestigenden Gegenstand und im Fahrzeug als auch bei einer Demontage bzw. einem Lösen der Befestigungselemente.

Das Dokument EP3387900 A1 offenbart eine Vorrichtung zur Fixierung eines Gegenstandes, insbesondere eines Transportbehältnisses, in einem Fahrzeug, mit den technischen Merkmalen des Oberbergriffs von Anspruch 1.

Aufgabe der Erfindung ist es, eine Vorrichtung der eingangs genannten Art anzugeben, welche einen niedrigen Platzbedarf aufweist und flexibel anwendbar ist. Dies soll auf einfache und kostengünstige Weise erreicht werden.

Die Aufgabe wird erfindungsgemäß durch eine Vorrichtung nach Anspruch 1 gelöst.

Ein mit der Erfindung erzielter Vorteil ist insbesondere darin zu sehen, dass durch eine Bewegung der Befestigungselemente mit der Betätigungseinrichtung eine platzsparende Aufbewahrungsposition der Befestigungselemente auf einfache und rasche Weise erreicht werden kann. Weiter ist durch eine Bewegbarkeit der Befestigungselemente relativ zur Koppeleinrichtung eine erhöhte Flexibilität in einer Anwendung der Vorrichtung gegeben, zumal dadurch eine Position des zu befestigenden Gegenstandes relativ zu den Koppeleinrichtungen variabel ist. Dadurch können im Unterschied zu Vorrichtungen des Standes der Technik Gegenstände beispielsweise auch außermittig zu entsprechenden Halterungen in einem Fahrzeug, insbesondere zu ISOFIX-Haltebügeln, angeordnet werden, mit welchen Halterungen die Vorrichtung mit dem Fahrzeug starr verbunden wird.

Weiter kann mittels der translatorischen Bewegbarkeit auch ein horizontale Positionierung des Gegenstandes auf einem Fahrzeugsitz unabhängig von einer Neigung einer Sitzfläche des Fahrzeugsitzes erreicht werden. Beispielsweise können dadurch Behälter auch auf schrägen Sitzflächen auf einfache Weise derart positioniert werden, dass ein Boden des Behälters horizontal ausgerichtet ist. Dies kann insbesondere für den Transport von Haustieren vorteilhaft sein.

Zweckmäßigerweise sind die Befestigungselemente mittels einer translatorischen Bewegung der Betätigungseinrichtung in die erste Richtung und einer Drehbewegung der Befestigungselemente aus einer Transportposition in eine Arbeitsposition bewegbar, wobei die Befestigungselemente in der Arbeitsposition mit Haltebügeln einer Fahrzeugkarosserie verbindbar sind. Dadurch ist es besonders einfach, die Befestigungselemente aus der Transportposition in die Arbeitsposition zu bringen, wobei die Befestigungselemente in der Transportposition vorzugsweise für einen Benutzer unsichtbar in der Vorrichtung positioniert sind.

Erfindungsgemäß sind die Befestigungselemente mit der Betätigungseinrichtung um eine Rotationsachse drehbar verbunden, wobei die Rotationsachse etwa senkrecht zur ersten Richtung ist. Dadurch können die Befestigungselemente unter verschiedenen Winkeln mit den Haltebügeln der Fahrzeugkarosserie verbunden werden, wodurch eine hohe Flexibilität erreicht ist.

Erfindungsgemäß ist vorgesehen, dass die Rotationsachse relativ zur Koppeleinrichtung entlang der ersten Richtung translatorisch verschiebbar ist. Dies ermöglicht auf einfache Weise sowohl eine Rotation als auch eine Translation der Befestigungselemente relativ zum zu befestigenden Gegenstand. Eine Verschiebbarkeit der Rotationsachse kann beispielsweise dann einfach erreicht werden, wenn die Rotation der Befestigungselemente durch eine drehbare Lagerung eines Verbindungselementes erreicht wird, welches Verbindungselement die Befestigungselemente verbindet, wobei die Lagerung entlang der ersten Richtung bewegbar mit der Koppeleinrichtung verbunden ist.

Erfindungsgemäß ist vorgesehen, dass die Koppeleinrichtung Führungen für die Befestigungselemente aufweist, wobei die Führungen entlang der ersten Richtung ausgerichtet sind, durch welche Führungen ein Drehwinkel der Befestigungselemente um die Rotationsachse festgelegt ist, wenn sich die Befestigungselemente in einer Transportposition befinden. Darüber hinaus kann vorgesehen sein, dass die Führungen die Befestigungselemente in der Transportposition verdecken, wodurch ein sicheres und platzsparendes Verwahren der Befestigungselemente möglich ist. Mit den Führungen kann somit einfach erreicht werden, dass ein Drehwinkel der Befestigungselemente relativ zur Koppeleinrichtung abhängig von einer Position der Befestigungselemente relativ zur Koppeleinrichtung entlang der ersten Richtung ist. Somit können die Befestigungselemente beispielsweise automatisch gedreht werden, wenn die Befestigungselemente entlang der ersten Richtung translatorisch verschoben werden, um die Befestigungselemente von einer Arbeitsposition in eine Transportposition bzw. wieder zurück in die Transportposition zu bringen. In einer besonders einfachen Ausführungsform können die Koppeleinrichtung und die Führungen durch ein einziges Bauteil, insbesondere ein Blech, gebildet sein, wobei an das Blech einerseits ein zu transportierender Gegenstand ankoppelbar und andererseits ein Teil des Bleches als Führung für die Befestigungselemente dienen kann.

Um die Befestigungselemente automatisch nach einem Verlassen der Führungen zu drehen, sodass diese in der Arbeitsposition leicht an korrespondierende Elemente, insbesondere ISOFIX-Haltebügel, ankoppelbar sind, ist erfindungsgemäß vorgesehen, dass die Befestigungselemente in der Transportposition durch eine Feder derart federbelastet sein, dass die Befestigungselemente bei einem Verlassen der Führungen entlang der ersten Richtung durch die Feder um die Rotationsachse gedreht werden. Somit können die Befestigungselemente beispielsweise in der Transportposition platzsparend parallel zu einer Rückfläche der Koppeleinrichtung angeordnet sein und bei einer translatorischen Bewegung in die Arbeitsposition automatisiert in Richtung der ISOFIX-Haltebügel gedreht werden, um ein einfaches Ankoppeln zu ermöglichen.

Es ist von Vorteil, wenn Längsachsen der Befestigungselemente in der Transportposition etwa parallel zur ersten Richtung sind. Dies ermöglicht eine besonders platzsparende Verwahrung der Befestigungselemente in der Transportposition. Insbesondere ISOFIX-Adapter sind üblicherweise länglich ausgebildet, sodass eine Ausrichtung der Längsachse parallel zur ersten Richtung eine platzsparende Anordnung an oder in der Vorrichtung ermöglicht. Üblicherweise sind die Längsachsen in der Transportposition auch parallel zu einer vorzugsweise etwa ebenen Rückfläche der Vorrichtung ausgerichtet.

Zweckmäßigerweise ist die Betätigungseinrichtung relativ zur Koppeleinrichtung in unterschiedlichen Relativpositionen entlang der ersten Richtung fixierbar, insbesondere mittels eines Raststiftes. Bei Einsatz der Vorrichtung auf einem Sitz in einem Fahrzeug ermöglicht dies eine einfache Anpassung der Koppeleinrichtung an eine Sitzneigung, sodass beispielweise ein als Behältnis für ein Haustier oder dergleichen ausgebildeter Gegenstand mit der Vorrichtung unabhängig von einer Neigung der Sitzfläche immer derart befestigbar ist, dass eine horizontale Ausrichtung des Behältnisses für das Haustier gewährleistet ist. Anders ausgedrückt lässt sich dadurch ein vertikaler Ausgleich einer Sitzschräge sehr einfach erreichen. Wird eine Arretierbarkeit mit einem Raststift umgesetzt, ist dieser üblicherweise federnd mit einem bewegbar mit der Koppeleinrichtung verbundenen Teil der Vorrichtung verbunden und sind dann in einem starr mit der Koppeleinrichtung verbundenen Teil der Vorrichtung bzw. der Koppeleinrichtung selbst in der Regel mehrere, entlang der ersten Richtung verteilte Öffnungen vorgesehen, in welche der Raststift eingreifen kann, um die Betätigungseinrichtung über die Öffnung formschlüssig mit der Koppeleinrichtung zu verbinden. Ein Verschieben der Befestigungselemente relativ zur Koppeleinrichtung entlang der ersten Richtung ist somit nur dann möglich, wenn der Raststift nicht in einer der Öffnungen eingerastet bzw. nicht formschlüssig mit einer Öffnung verbunden ist.

Bevorzugt sind die Befestigungselemente relativ zur Koppeleinrichtung in einer zweiten Richtung translatorisch bewegbar, wobei die zweite Richtung vorzugsweise senkrecht zur ersten Richtung ist. Dadurch kann die Position des zu befestigenden Gegenstandes relativ zu den Haltebügeln der Fahrzeugkarosserie für eine besonders günstige Fahrgastraumausnützung eingestellt werden. Die Position eines an einem Fahrzeugsitz befestigten Gegenstandes kann somit auch horizontal relativ zu mit dem Fahrzeugsitz starr verbundenen ISOFIX-Haltebügeln variiert werden, um beispielsweise sehr breite Gegenstände auch mit einem schmalen Fahrzeug zu transportieren, indem der zu transportierende Gegenstand horizontal außermittig mit den ISOFIX-Haltebügeln verbunden wird.

Es hat sich bewährt, dass die Betätigungseinrichtung ein erstes Element, welches starr mit der Koppeleinrichtung verbunden ist, und ein zweites Element aufweist, wobei das zweite Element relativ zum ersten Element entlang der ersten Richtung bewegbar ist und die Befestigungselemente entlang der zweiten Richtung bewegbar mit dem zweiten Element verbunden sind. Das zweite Element bildet somit einen gegenüber dem ersten Element entlang der ersten Richtung verfahrbaren Schlitten. Auf diese Weise ist auf konstruktiv einfache Weise eine Bewegbarkeit der Befestigungselemente relativ zur Koppeleinrichtung in zwei unterschiedlichen Richtungen gegeben, wodurch eine optimale Positionierung des zu fixierenden Gegenstandes beispielsweise in einem Fahrzeug relativ zu einer Sitzbank erreicht werden kann.

Günstig ist es, wenn die Befestigungselemente über ein Verbindungselement starr verbunden sind, wobei das Verbindungselement in einer Verbindungsführung im zweiten Element geführt ist. Weiter kann dadurch auf einfache Weise ein konstanter Abstand zwischen den Befestigungselementen sichergestellt werden. Dies ist zweckmäßig, wenn die Befestigungselemente als ISOFIX-Adapter ausgebildet sind, zumal entsprechende ISOFIX-Haltebügel in einem Fahrzeug einen fixen und genormten Abstand voneinander aufweisen.

Als praktikabel hat sich erwiesen, wenn das Verbindungselement in der Verbindungsführung um eine Rotationsachse rotierbar ist, wobei die Rotationsachse vorzugsweise parallel zur zweiten Richtung ist. Dadurch ist es möglich, die über das Verbindungselement verbundenen Befestigungselemente relativ zur Koppeleinrichtung zu rotieren und somit in variablen Positionen an die Haltebügel der Fahrzeugkarosserie zu koppeln. Üblicherweise ist die Verbindungsführung im zweiten Element angeordnet und somit zudem relativ zur Koppeleinrichtung entlang der ersten Richtung translatorisch verschiebbar.

Um die Befestigungselemente auch in der zweiten Richtung relativ zur Koppeleinrichtung zu fixieren, können die Befestigungselemente relativ zum zweiten Element in unterschiedlichen Fixpositionen entlang der zweiten Richtung lösbar arretierbar sein, wobei eine Arretierung insbesondere durch eine Rotation der Befestigungselemente um die Rotationsachse lösbar ist. Eine Arretierung kann dann beispielsweise dadurch erfolgen, dass am rotierbar angeordneten Verbindungselement ein oder mehrere Vorsprünge angeordnet sind, welche in Ausnehmungen im zweiten Element eingreifen können, wenn das Verbindungselement eine bestimmte erste Winkelposition relativ zur Koppeleinrichtung aufweist, und welche gegenüber den Ausnehmungen entlang der zweiten Richtung verschiebbar sind, wenn das Verbindungselement eine bestimmte zweite Winkelposition relativ zur Koppeleinrichtung aufweist. Nachdem das zweite Element in der Regel nur entlang der ersten Richtung relativ zur Koppeleinrichtung bewegbar ist, jedoch entlang der zweiten Richtung starr mit der Koppeleinrichtung verbunden ist, ist durch eine derart über den Vorsprung und die Ausnehmung erfolgte formschlüssige Verbindung eine starre Verbindung zwischen dem Verbindungselement und der Koppeleinrichtung entlang der zweiten Richtung erreicht, wenn der Vorsprung in der Ausnehmung positioniert ist. Als erste Winkelposition wird dann bevorzugt eine Winkelposition gewählt, in welcher die Befestigungselemente in korrespondierende Aufnahmen eingreifen können, sodass dann, wenn die Vorrichtung mit Aufnahmen eines Fahrzeuges, insbesondere ISOFIX-Haltebügeln, verbunden ist, keine Verschiebung entlang der zweiten Richtung möglich ist. In der Regel entspricht die erste Winkelposition zur Fixierung der Befestigungselemente entlang der zweiten Richtung einer Position, welche die Befestigungselemente relativ zur Koppeleinrichtung in der Arbeitsposition aufweisen. Eine Verschiebung der Befestigungselemente relativ zur Koppeleinrichtung ist üblicherweise entlang der zweiten Richtung möglich, wenn Längsachsen der Befestigungselemente etwa parallel zur ersten Richtung sind.

Bevorzugt sind die Befestigungselemente mit korrespondierenden Befestigungseinrichtungen im Fahrzeug, insbesondere ISOFIX-Haltebügel, lösbar koppelbar, wobei eine Koppelung mittels der Betätigungseinrichtung lösbar ist. Dadurch ist es auf einfache Weise möglich, die Vorrichtung in Fahrzeugen zum Transport beliebiger Gegenstände einzusetzen, zumal ISOFIX-Haltebügel in jedem PKW vorgesehen sind.

Zweckmäßigerweise ist vorgesehen, dass die Koppelung mittels einer Betätigungsbewegung an der Betätigungseinrichtung, vorzugsweise über ein Auslöseelement, lösbar ist, wobei die Betätigungsbewegung bevorzugt über ein Zugmittel, insbesondere ein Seil, von der Betätigungseinrichtung an die Befestigungselemente übertragbar ist, welches Zugmittel durch eine Rotationsachse geführt ist, um welche die Befestigungselemente drehbar sind, sodass ein Lösen der Koppelung unabhängig von einem Winkel der Befestigungselemente um die Rotationsachse möglich ist. Dadurch kann eine Betätigung beispielsweise über eine kopfseitige Betätigungseinrichtung an der Vorrichtung erfolgen, welche beabstandet von den Befestigungselementen ist, wobei die Befestigungselemente relativ zur Betätigungseinrichtung bewegbar, insbesondere rotierbar und/oder translatorisch verschiebbar, sind.

Um eine Betätigungsbewegung von dem Auslöseelement an die Befestigungselemente zu übertragen, kann ein Übertragungsbauteil vorgesehen sein, welches einerseits mit dem Auslöseelement und andererseits mit dem Seil bzw. den Seilen für die Befestigungselemente verbunden ist. Um die Bewegung unabhängig von einer Position der Befestigungselemente relativ zur Koppeleinrichtung entlang der zweiten Richtung vom Auslöseelement auf die Befestigungselemente zu übertragen, kann das Übertragungsbauteil ein erstes Übertragungselement, welches nur entlang der ersten Richtung bewegbar mit der Koppeleinrichtung, und ein mit dem ersten Übertragungselement entlang der zweiten Richtung bewegbar, jedoch entlang der ersten Richtung starr mit dem ersten Übertragungselement verbundenes zweites Übertragungselement aufweisen, wobei am zweiten Übertragungselement je Befestigungselement ein Seil angeordnet ist, welches Seil mit dem jeweiligen Befestigungselement zum Lösen einer Koppelung verbunden ist. Das zweite Element kann dann mit den Befestigungselementen entlang der zweiten Richtung relativ zur Koppelungseinrichtung bewegt werden, um den zu befestigenden Gegenstand in unterschiedlichen Positionen entlang der zweiten Richtung relativ zu den Befestigungselementen in einem Fahrzeug zu befestigen. Das zweite Übertragungselement ist dann relativ zu den Befestigungselementen entlang der ersten Richtung mittels des Auslöseelementes bewegbar, um mittels einer Bewegung der Seile die Befestigungselemente zu lösen.

Um die Vorrichtung besonders einfach an unterschiedlichste Fahrzeuge anpassen zu können, kann vorgesehen sein, dass ein Abstand der Befestigungselemente von der Rotationsachse änderbar ist, beispielsweise indem eine Länge der als ISOFIX-Adapter ausgebildeten Befestigungselemente mittels eines Rastsystems oder mit Einstellschrauben änderbar ist. Dadurch kann eine horizontale Ausrichtung der Vorrichtung in unterschiedlichsten Fahrzeugen auf einfache Weise erreicht werden.

Bevorzugt ist an der Betätigungseinrichtung ein biometrischer Sensor, insbesondere ein Fingerabdrucksensor, oder eine Eingabeeinrichtung für einen Code, einen Schlüssel oder dergleichen vorgesehen, wobei die Koppelung mittels des biometrischen Sensors oder der Eingabeeinrichtung lösbar ist. Die Vorrichtung kann somit auf einfache Weise nicht nur zum Transport eines Gegenstandes in einem Fahrzeug, sondern auch zur Sicherung eines Gegenstandes in einem Fahrzeug gegen Diebstahl eingesetzt werden. Dadurch kann beispielsweise ein als Wertgegenstand oder Computer ausgebildeter Gegenstand über die Vorrichtung derart mit dem Fahrzeug verbunden werden, dass nur eine autorisierte Person bzw. eine Person, die ein bestimmtes biometrisches Merkmal aufweist, einen bestimmten Code kennt und/oder Inhaber eines entsprechenden Schlüssels ist, den Gegenstand vom Fahrzeug lösen und aus dem Fahrzeug entnehmen kann. Ein Diebstahl des Gegenstandes bloß durch Einschlagen einer Autoscheibe ist somit nicht mehr möglich.

Optional kann ein optisches und/oder akustisches Signal erzeugbar sein, anhand dessen für den Benutzer erkennbar ist, ob die Befestigungselemente mit den Befestigungseinrichtungen gekoppelt sind. Dadurch ist bei einem Start des Fahrzeuges für einen Fahrer sofort ersichtlich, ob der zu fixierende Gegenstand mit den Befestigungselementen sicher an den Haltebügeln der Fahrzeugkarosserie befestigt ist. Hierzu können beispielsweise Sensoren an den Befestigungseinrichtungen vorgesehen sein, mit welchen ein Koppelzustand festgestellt wird, welche mit einer Einrichtung zur Erzeugung eines entsprechenden Signales verbunden sind.

Besonders vorteilhaft ist es, wenn die Betätigungseinrichtung ein Griffstück aufweist, welches relativ zur Koppeleinrichtung und relativ zu den Befestigungselementen bewegbar ist, vorzugsweise entlang der ersten Richtung, wobei das Griffstück insbesondere über eine Teleskopstange mit der Koppeleinrichtung verbunden ist. Die Vorrichtung kann somit außerhalb des Fahrzeuges auf einfache Weise auf einem Boden oder dergleichen positioniert und dennoch aufgrund des relativ zur Koppeleinrichtung bewegbaren Griffstückes einfach gehandhabt werden.

Als praktikabel hat sich erwiesen, wenn Roll- oder Gleitelemente vorgesehen sind, vorzugsweise an einer Seite der Vorrichtung, welche einer Seite, an welche ein Griffstück angeordnet ist, gegenüberliegt, um die Vorrichtung rollend oder gleitend zu bewegen. Dadurch kann der Gegenstand außerhalb des Fahrzeuges auf einfache Art und Weise fortbewegt werden. Die Roll- oder Gleitelemente können natürlich auch in die Vorrichtung integriert sein, insbesondere wenn das Koppelelement als Platte ausgebildet ist.

Bevorzugt ist vorgesehen, dass die Koppeleinrichtung einen Gurt samt einer Spannvorrichtung für den Gurt aufweist oder ein solcher Gurt starr mit der Koppeinrichtung verbunden ist, um einen Gegenstand mittels des Gurtes auf einfache Weise an die Koppeleinrichtung zu spannen.

Mit einem solchen Gurt kann die Vorrichtung auf einfache Weise auch an einen anderen Gegenstand gespannt werden, beispielsweise an einen Sitz eines Kraftfahrzeuges, wenn das Kraftfahrzeug nicht mit einer Koppeleinrichtung bzw. ohne einen ISOFIX-Haltebügel ausgebildet ist. Weiter kann die Vorrichtung mittels eines solchen Gurtes auch einfach in einem Kofferraum eines Kraftfahrzeuges fixiert werden, um auch bei Nichtbenutzung platzsparend fixiert werden zu können, sodass Beschädigungen durch Bewegungen relativ zum Fahrzeug vermieden sind.

Die Spannvorrichtung kann dabei als Ratsche oder als federbelastete Aufrollvorrichtung ausgebildet sein, sodass der Gurt gegen die Federkraft aus der Aufrollvorrichtung gezogen werden kann und durch die Federkraft automatisch aufrollbar ist, wenn der Gurt nicht gebraucht wird. Der Gurt kann einseitig fix mit der Koppeleinrichtung verbunden oder lösbar mit der Koppeleinrichtung verbindbar sein, beispielsweise form- und/oder kraftschlüssig, insbesondere mittels eines Klemmmechanismus, sodass der Gurt, wenn dieser nicht benötigt wird, gänzlich in der Aufrollvorrichtung aufgerollt werden und nur bei Bedarf an einer fixen, der Aufrollvorrichtung in der Regel gegenüberliegenden, Position mit der Koppeleinrichtung verbunden werden kann. Es kann auch vorgesehen sein, dass die Spannvorrichtung einen aus der Koppeleinrichtung ausziehbaren Betätigungsmechanismus aufweist, beispielsweise einen Gurtspannhebel, welcher vollständig in der Koppeleinrichtung versenkbar ist, um geringe Außenabmessungen zu erreichen. Mit dem Betätigungsmechanismus kann dann beispielsweise eine Rolle oder Welle, an der ein Ende des Gurtes befestigt ist, in einer Spannrotationsrichtung bewegt werden, um den Gurt an der Rolle oder Welle aufzuwickeln und den Gurt somit zu spannen. Eine Rotation entgegen der Spannrotationsrichtung ist üblicherweise mittels eines Sperrelementes lösbar blockierbar, sodass ein gespannter Gurt durch ein Betätigen des Sperrelementes gelöst werden kann, indem die Rolle oder Welle entgegen der Spannrotationsrichtung bewegt wird.

Die Spannvorrichtung kann dabei in einer als Platte ausgebildeten Koppeleinrichtung integriert sein, sodass bei aufgerolltem Gurt nur ein Ende des Gurtes ersichtlich ist, mit welchem der Gurt aus der Platte gezogen werden kann. Alternativ kann der Gurt und/oder die Spannvorrichtung auch an der Koppeleinrichtung angeordnet sein. Ferner ist es denkbar, dass der Gurt und die Spannvorrichtung lösbar mit der Koppeleinrichtung verbunden sind, beispielsweise mittels eines an der Koppeleinrichtung angeordneten Clip-Systems.

Der Gurt ist bevorzugt an einer Position starr mit der Koppeleinrichtung und an einer zweiten Position über die Spannvorrichtung mit der Koppeleinrichtung mittelbar oder unmittelbar verbunden, sodass eine Länge des Gurtes zwischen der ersten Position und der zweiten Position mittels der Spannvorrichtung geändert werden kann, um zwischen dem Gurt und der Koppeleinrichtung einen Gegenstand mittels des Gurtes zu spannen. Eine mittelbare Verbindung des Gurtes mit der Koppeleinrichtung ist beispielsweise möglich, wenn der Gurt nicht mit der Koppeleinrichtung selbst verbunden ist, sondern mit einer mit der Koppeleinrichtung verbundenen Einrichtung wie beispielsweise einer Schaufel zum Transport von Gegenständen.

Natürlich können auch mehrere Gurte an der Koppeleinrichtung angeordnet bzw. mit der Koppeleinrichtung verbunden sein, um einen mit der Koppeleinrichtung verbundenen Gegenstand an mehreren Positionen zu sichern. Beispielsweise können zwei Gurte vorgesehen sein, welche sich parallel in vertikaler oder horizontaler Richtung über die Koppeleinrichtung erstrecken, welche beispielsweise als Platte ausgebildet sein kann.

Weiter kann es vorteilhaft sein, wenn ein Haken oder dergleichen vorgesehen ist, um beispielsweise eine Einkaufstasche formschlüssig mit der Vorrichtung zu verbinden, insbesondere am Griffstück.

Alternativ oder ergänzend zu einer Spannvorrichtung kann ein form- und/oder kraftschlüssiges Befestigungssystem vorgesehen sein, um eine starre Verbindung zwischen einem Behälter und der Vorrichtung zu ermöglichen, beispielsweise mit einem Klippsystem oder einer Öffnung bzw. einem Vorsprung in der Vorrichtung, in welche Öffnung ein Vorsprung eines Behälters bzw. welcher Vorsprung in eine Öffnung eines Behälters einrasten kann.

Um sperrige Gegenstände wie beispielsweise eine Getränkekiste mit der Vorrichtung auf einfache Weise transportieren zu können, kann eine Schaufel bzw. eine Transportschaufel vorgesehen sein, welche üblicherweise an einem unteren Ende der Vorrichtung bzw. bodenseitig schwenkbar mit der Koppeleinrichtung verbunden sein kann. In der Regel ist die Schaufel dabei um eine zur zweiten Richtung parallele Schwenkachse schwenkbar, sodass die Vorrichtung auf einfache Weise in einen Zustand gebracht werden kann, in welchem beispielsweise eine Getränkekiste zwischen der Koppeleinrichtung und der Schaufel transportierbar ist, beispielsweise mittels bodenseitiger Rollelemente, wobei die Vorrichtung dennoch durch ein Anklappen der Schaufel auch einfach in einen kompakten Zustand gebracht werden kann. Die Schaufel kann auch als Aufnahme für einen oder mehrere Gurte dienen, um Gegenstände an die Vorrichtung zu binden bzw. an die Vorrichtung zu spannen. Der oder die Gurte können dabei mit der Schaufel fix oder lösbar, kraft- und/oder formschlüssig verbunden sein.

Die Vorteile einer erfindungsgemäßen Vorrichtung können dann besonders gut umgesetzt werden, wenn die Vorrichtung in einem Set zum Transport von Gegenständen in einem Fahrzeug eingesetzt wird, wobei die Vorrichtung erfindungsgemäß ausgebildet ist und eine Transporteinrichtung vorgesehen ist, welche starr mit der Vorrichtung verbunden ist.

Die Transporteinrichtung kann dabei zum Transport unterschiedlichster Gegenstände eingesetzt werden, sodass unterschiedlichste Gegenstände in einem Fahrzeug fixiert werden können.

Zweckmäßigerweise ist die Transporteinrichtung als ein Behältnis zum Transport eines Haustieres ausgebildet, wobei insbesondere innenseitig deformierbare Elemente angeordnet sein können. Dadurch können auch Haustiere während der Fahrt im Fahrzeug sicher und verletzungsfrei transportiert werden. Die deformierbaren Elemente können beispielsweise als Luft und/oder einen weichen Kunststoff enthaltende Kissen ausgebildet sein, sodass ein in der Transporteinrichtung befindliches Tier bei starken Beschleunigungen des Fahrzeuges nicht verletzt wird.

Um Kinder während der Fahrt im Fahrzeug sicher und verletzungsfrei zu transportieren, kann die Transporteinrichtung als Kindersitz ausgebildet sein. Aufgrund der erfindungsgemäßen Vorrichtung ist der Kindersitz dann leicht an unterschiedliche Fahrzeuge anpassbar und leicht im Fahrzeug montierbar sowie einfach lösbar.

Bevorzugt kann der Kindersitz eine klappbare Sitzfläche und klappbare Seitenelemente aufweisen, sodass der Kindersitz auf kleinem Raum zusammenklappbar ist, wodurch eine platzsparende Aufbewahrung des Kindersitzes ermöglicht wird.

Um diverse Werkzeugteile und/oder Unterlagen sicher in einem Fahrzeug zu transportieren, kann die Transporteinrichtung als verschließbares Transportbehältnis, insbesondere als Werkzeugkasten, als Laptoptasche oder Aktenkoffer, ausgebildet sein. Insbesondere in Verbindung mit einer nur durch eine Autorisierung lösbaren Verbindung der Vorrichtung mit dem Fahrzeug, beispielsweise durch Eingabe eines Codes oder Erfassung eines biometrischen Merkmals, kann mittels der erfindungsgemäßen Vorrichtung hier ein wirksamer Diebstahlschutz erreicht werden.

Es ist von Vorteil, wenn die Vorrichtung und/oder die Transporteinrichtung eine Lasche aufweist, durch welche die Transporteinrichtung mittels eines Gurtes bei Anordnung in einem Fahrzeug zusätzlich sicherbar ist. Dadurch kann ein in Personenkraftwagen ohnedies vorgesehener Gurt bzw. ein Top-Tether auf einfache Weise zur Fixierung des Gegenstandes eingesetzt werden.

Weitere Merkmale, Vorteile und Wirkungen der Erfindung ergeben sich anhand der nachfolgend dargestellten Ausführungsbeispiele. In den Zeichnungen, auf welche dabei Bezug genommen wird, zeigen:
Fig. 1 eine schematische, perspektivische Darstellung einer erfindungsgemäßen Vorrichtung zur Fixierung eines Gegenstandes in einem Fahrzeug;
Fig. 2 eine Seitenansicht der Vorrichtung gemäß Fig. 1;
Fig. 3a eine perspektivische Darstellung einer Rückseite der Vorrichtung gemäß Fig. 1 in einer Transportposition;
Fig. 3b eine perspektivische Darstellung einer Vorderseite der Vorrichtung gemäß Fig. 1 in der Transportposition;
Fig. 4 eine perspektivische Darstellung der Vorrichtung gemäß Fig. 1 mit telekopiertem Griffstück;
Fig. 5 eine perspektivische Unteransicht der Vorrichtung gemäß Fig. 1;
Fig. 6a eine Frontalansicht der Vorrichtung gemäß Fig. 1;
Fig. 6b eine Frontalansicht der Vorrichtung gemäß Fig. 1 mit seitlich versetzten Befestigungselementen;
Fig. 7 eine Seitenansicht eines Sets gekoppelt an einen Fahrzeugsitz;
Fig. 8 eine schematische, perspektivische Darstellung einer weiteren erfindungsgemäßen Vorrichtung;
Fig. 9 und 10 eine weitere erfindungsgemäße Vorrichtung in unterschiedlichen Arbeitszuständen;
Fig. 11 eine erfindungsgemäße Vorrichtung;
Fig. 12 und 13 eine erfindungsgemäße Vorrichtung in Seitenansicht in unterschiedlichen Arbeitszuständen.

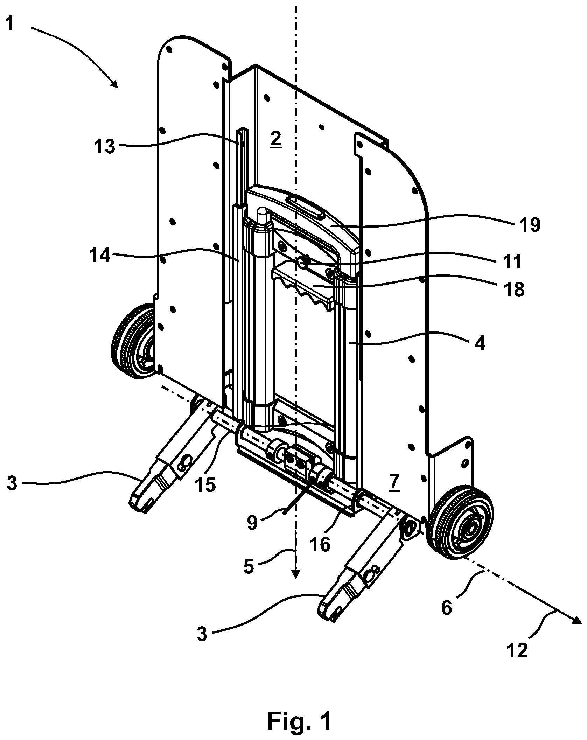

Fig 1 zeigt eine schematische und perspektivische Darstellung einer erfindungsgemäßen Vorrichtung 1 zur Fixierung eines Gegenstandes in einem Fahrzeug. Wie ersichtlich weist die erfindungsgemäße Vorrichtung 1 eine Koppeleinrichtung 2 auf, mit welcher der beispielsweise als Behälter zum Transport eines Haustieres ausgebildete Gegenstand starr verbindbar ist, sowie zwei Befestigungselemente, welche hier als ISOFIX-Adapter 3 ausgebildet sind. Die ISOFIX-Adapter 3 sind über eine Betätigungseinrichtung 4 mit der Koppeleinrichtung 2 verbunden. Die Betätigungseinrichtung 4 umfasst ein erstes Element 13 und ein zweites Element 14, wobei das erste Element 13 starr mit der Koppeleinrichtung 2 verbunden ist und als eine Führungsschiene für das zweite Element 14 dient, welches somit entlang einer ersten Richtung 5 translatorisch relativ zum ersten Element 13 bzw. relativ zur Koppeleinrichtung 2 bewegbar ist. Hierzu ist das zweite Element 14 mit dem ersten Element 13 im Ausführungsbeispiel derart formschlüssig verbunden, dass das zweite Element 14 relativ zum ersten Element 13 nur entlang der ersten Richtung 5 bewegbar ist. Somit können die ISOFIX-Adapter relativ zur Koppeleinrichtung 2 entlang der ersten Richtung 5 bewegt werden, wodurch sich bei Anordnung in einem Fahrzeug eine Verschiebbarkeit des mit der Koppeleinrichtung 2 verbundenen Gegenstandes relativ zu den ISOFIX-Adaptern 3 entlang der ersten Richtung 5 ergibt. Bei der dargestellten Vorrichtung 1 kann dies etwa eine vertikale Richtung sein.

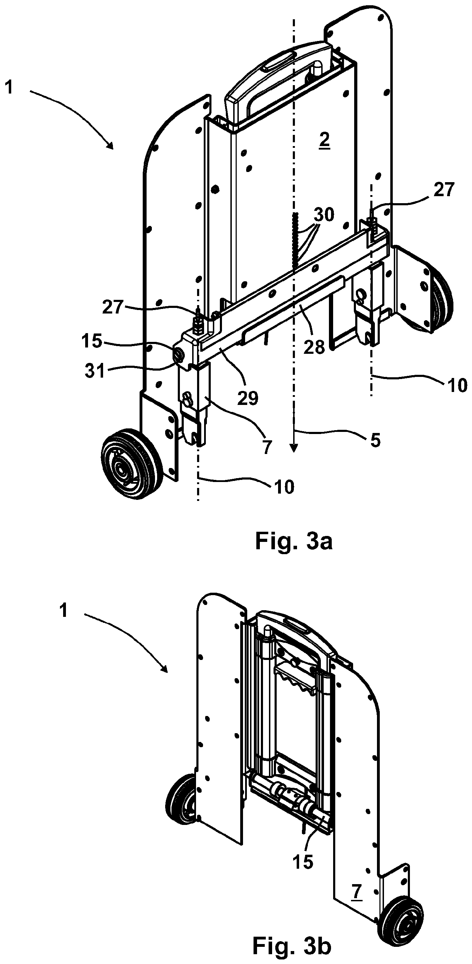

Um den Gegenstand in verschiedenen Positionen entlang der ersten Richtung 5 fix mit der Koppeleinrichtung 2 verbinden zu können, ist zur Arretierung der Betätigungseinrichtung 4 in unterschiedlichen Positionen entlang der ersten Richtung 5 ein Raststift 11 an der Betätigungseinrichtung 4 angeordnet, welcher in mehrere, entlang der ersten Richtung 5 an der Koppeleinrichtung 2 angeordnete Öffnungen 30 eingreifen kann, welche insbesondere in Fig. 3a ersichtlich sind. Die Koppeleinrichtung 2 ist hier durch einen gebogenen Blechteil gebildet, kann jedoch natürlich auch aus einem oder mehreren anderen Materialien wie beispielsweise Holz gebildet sein.

Für eine vorteilhafte Kraftübertragung von einer Hand eines Benutzers auf die Betätigungseinrichtung 4 ist an der Betätigungseinrichtung 4 endseitig ein Griffstück 19 vorgesehen.

Die ISOFIX-Adapter 3 sind wie dargestellt über ein Verbindungselement 15 verbunden, welches in Verbindungsführungen 16 der Betätigungseinrichtung 4 geführt ist und entlang einer zweiten Richtung 12 relativ zu den Verbindungsführungen 16 bewegbar ist. Die Verbindungsführungen 16 sind in einem starr mit dem zweiten Element verbundenen Teil der Vorrichtung angeordnet, sodass das Verbindungselement samt den ISOFIX-Adaptern relativ zur Koppeleinrichtung bzw. relativ zu dem zu befestigenden Gegenstand entlang der ersten Richtung 5 und entlang der zweiten Richtung 12 translatorisch bewegbar ist. Die erste Richtung 5 ist hier etwa senkrecht zur zweiten Richtung 12, wodurch eine Positionierung des Gegenstandes, welcher beispielsweise als Behälter zum Transport von Tieren ausgebildet sein kann, relativ zum Fahrzeug, in welchem dieser mit den ISOFIX-Adaptern 3 befestigt ist, sowohl in horizontaler als auch in vertikaler Richtung möglich ist, um den Behälter besonders gut an einen Fahrzeugsitz anpassen zu können.

Darüber hinaus ist das Verbindungselement 15 in der Verbindungsführung 16 um eine Rotationsachse 6 rotierbar, welche konstruktiv hier durch die mit einer zylindrischen Außenkontur des Verbindungselementes 15 korrespondierende Verbindungsführung 16 gebildet wird. Dadurch sind die ISOFIX-Adapter 3 um die Rotationsachse 6 drehbar mit dem zweiten Element 14 und somit drehbar mit der Koppeleinrichtung 2 verbunden, sodass die Koppeleinrichtung 2 unter unterschiedlichen Winkeln mit ISOFIX-Haltbügeln in einem Fahrzeug verbindbar ist.

Die Vorrichtung kann in eine insbesondere in Fig. 1, Fig. 2 sowie Fig. 5 bis Fig. 8 dargestellte Arbeitsposition, in welcher die ISOFIX-Adapter 3 mit ISOFIX-Haltbügeln in einem Fahrzeug verbindbar sind, und eine in Fig. 3a bis 4 dargestellte Transportposition gebracht werden, wobei die ISOFIX-Adapter 3 in der Transportposition derart in der Vorrichtung 1 angeordnet sind, dass diese von außen praktisch nicht sichtbar sind.

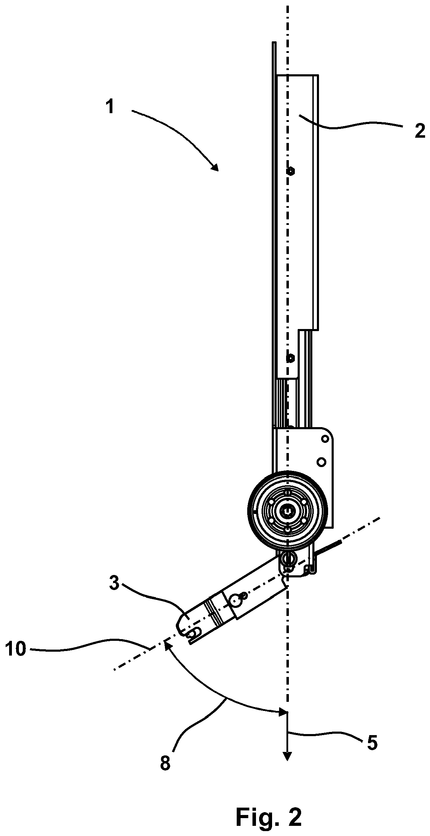

In der Transportposition bildet ein Teil der Koppeleinrichtung 2 eine Führung 7 für die ISOFIX-Adapter 3, sodass Längsachsen 10 der ISOFIX-Adapter 3 in der Transportposition platzsparend etwa parallel zur ersten Richtung 5 sowie etwa parallel zu einer Ebene einer Rückseite der Koppeleinrichtung 2 ausgerichtet sind, während die Längsachsen 10 der ISOFIX-Adapter 3 in der Arbeitsposition unter einem Winkel 8 zur ersten Richtung 5 angeordnet sind, wie insbesondere in Fig. 2 ersichtlich.

Um die ISOFIX-Adapter 3 leicht aus der Transportposition in die Arbeitsposition zu bringen, sind die ISOFIX-Adapter 3 in der Transportposition um die Rotationsachse 6 gegen die Führung mittels einer Feder 9 federbelastet, sodass die ISOFIX-Adapter 3 mittels der Feder 9 automatisch gedreht werden, wenn die ISOFIX-Adapter 3 die Führung verlassen bzw. entlang der ersten Richtung aus der Führung geschoben werden.

Um die Vorrichtung 1 von der Transportposition in die Arbeitsposition zu bringen, werden die ISOFIX-Adapter 3 mit der Betätigungseinrichtung 4 aus der Transportposition relativ zur Koppeleinrichtung 2 entlang der ersten Richtung 5 bewegt.

Bei einem Verlassen der Führungen 7 werden die ISOFIX-Adapter 3 dann durch die Feder 9 automatisch um die Rotationsachse 6 in die in Fig. 1 dargestellte Arbeitsposition gedreht. Dadurch ergibt sich ein einfacher Wechsel zwischen einer Transportposition, in welcher die ISOFIX-Adapter 3 unsichtbar und nicht für einen beispielsweise rollenden Transport störend in der Vorrichtung 1 angeordnet sind und einer Arbeitsposition, in welcher die Vorrichtung 1 über die ausgefahrenen und ausgeschwenkten ISOFIX-Adapter 3 unmittelbar mit einem Fahrzeug koppelbar ist.

Um die ISOFIX-Adapter 3 vom Fahrzeug zu lösen, ist an der Betätigungseinrichtung 4 ein Auslöseelement 18 angeordnet, welches in dem in Fig. 1 dargestellten Ausführungsbeispiel als ein Griff ausgebildet und hier relativ zur Koppeleinrichtung 2 entlang der ersten Richtung 5 bewegbar ist, um eine Betätigungsbewegung auf die ISOFIX-Adapter 3 aufzubringen. Das Auslöseelement 18 ist über zwei Seile 27 mit den ISOFIX-Adaptern 3 verbunden, wobei eine Betätigungsbewegung des Auslöseelementes 18 auf die Seile 27 mittels eines entlang der ersten Richtung 5 bewegbar mit der Koppeleinrichtung 2 verbundenen Übertragungsbauteiles übertragen wird. Die Seile 27 sind dabei am Verbindungselement 15 umgelenkt und verlaufen somit im Wesentlichen durch die Rotationsachse 6. Somit ist eine Betätigung unabhängig von Winkeln 8 möglich, welchen Längsachsen 10 der ISOFIX-Adapter 3 mit der ersten Richtung 5 einschließen.

In Fig. 2 ist eine Seitenansicht der erfindungsgemäßen Vorrichtung 1 abgebildet. Dabei ist ersichtlich, dass zur Bewegung der ISOFIX-Adapter 3 aus einer Transportposition in die Arbeitsposition nach translatorischer Bewegung der Betätigungseinrichtung 4 in die erste Richtung 5 relativ zur Koppeleinrichtung 2 auch eine Drehbewegung der Längsachse 10 der ISOFIX-Adapter 3 erfolgt ist, sodass diese unter einem Winkel 8, der hier etwa 50° beträgt, zur ersten Richtung 5 ausgerichtet sind. Die ISOFIX-Adapter 3 sind somit in dieser Arbeitsposition leicht an entsprechende Haltebügel 24 bzw. ISOFIX-Haltebügel in einem Fahrzeug ankoppelbar.

In Fig. 3a ist eine weitere perspektivische Ansicht der Koppeleinrichtung 2 dargestellt, wobei sich die ISOFIX-Adapter 3 in der Transportposition befinden, in welcher die ISOFIX-Adapter 3 platzsparend hinter der Führung 7 angeordnet und die Längsachsen 10 der ISOFIX-Adapter 3 parallel zur ersten Richtung 5 ausgerichtet sind. Dadurch wird eine platzsparende Aufbewahrung der Befestigungselemente ermöglicht. Weiter ist in Fig. 3a das ein erstes Übertragungselement 28 und ein zweites Übertragungselement 29 aufweisende Übertragungsbauteil ersichtlich, welches mit dem Auslöseelement 18 zur Betätigung der ISOFIX-Adapter 3 verbunden ist. Mit dem Übertragungsbauteil wird eine Übertragung einer Betätigungsbewegung des Auslöseelementes 18 auf die Seile 27 ermöglicht, welche Seile 27 derart mit den ISOFIX-Adaptern 3 verbunden sind, dass die ISOFIX-Adapter 3 durch einen Zug am jeweiligen Seil 27 von einem ISOFIX-Haltebügel gelöst werden können. Die Vorrichtung kann somit sehr komfortabel durch eine Betätigung am Auslöseelement 18 von einem Fahrzeug gelöst werden, und zwar auch dann, wenn die ISOFIX-Adapter 3 selbst nicht direkt zugänglich sind, beispielsweise aufgrund eines besonders großen zu transportierenden Gegenstandes, welcher mit der Koppeleinrichtung 2 verbunden ist.

Das Übertragungsbauteil wird hier durch ein erstes Übertragungselement 28 und ein zweites Übertragungselement 29 gebildet, wobei das erste Übertragungselement 28 starr mit dem Auslöseelement 18 und entlang der ersten Richtung 5 bewegbar mit der Koppeleinrichtung 2 verbunden ist. Das zweite Übertragungselement 29 ist entlang der zweiten Richtung 12 bewegbar mit dem ersten Übertragungselement 28, jedoch entlang der ersten Richtung 5 starr mit dem ersten Übertragungselement 28 verbunden. Im Ausführungsbeispiel ragt das Verbindungselement 15 durch das zweite Übertragungselement 29. Um die beim Auslöseelement 18 eingeleitete und über das erste Übertragungselement 28 an das zweite Übertragungselement 29 übertragene Betätigungsbewegung des zweiten Übertragungselementes 29 entlang der ersten Richtung relativ zum Verbindungselement 15 zu ermöglichen, ist hierzu im zweiten Übertragungselement 29 wie dargestellt ein Langloch 31 vorgesehen. Dadurch ist eine Bewegbarkeit des zweiten Übertragungselementes 29 relativ zur Koppeleinrichtung 2 sowohl entlang der ersten Richtung 5 als auch entlang der zweiten Richtung 12 gegeben, sodass eine Betätigung der ISOFIX-Adapter 3 unabhängig von einer Position der ISOFIX-Adapter 3 relativ zur Koppeleinrichtung 2 möglich ist.

In Fig. 3b ist eine perspektivische Darstellung der Vorrichtung 1 von einer weiteren Seite abgebildet, wobei sich die Vorrichtung 2 wie in Fig. 3a in der Transportposition befindet und die ISOFIX-Adapter 3 hinter der Führung 7 verborgen sind.

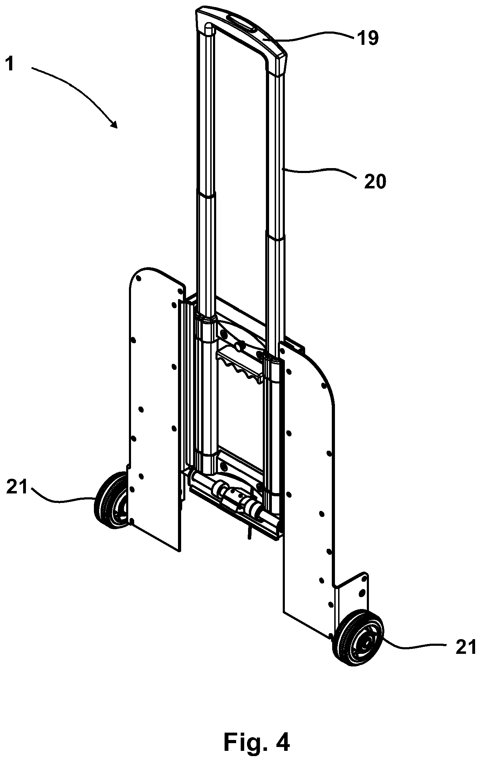

In Fig. 4 ist eine weitere perspektivische Darstellung der Vorrichtung 1 ersichtlich. Die Vorrichtung 1 weist zwei Rollelemente 21 auf, welche seitlich an der Vorrichtung 1 befestigt sind. Durch Verlagerung eines Schwerpunktes der Vorrichtung 1 samt dem im Fahrzeug zu fixierendem Gegenstand kann der Gegenstand auf den Rollelementen 21 mit Hilfe einer Teleskopstange 20 auch außerhalb des Fahrzeuges auf einfache Weise fortbewegt werden. In einem hier nicht dargestellten Ausführungsbeispiel kann auch vorgesehen sein, dass das Auslöseelement 18 am Griffstück 19 angeordnet ist, sodass die Betätigungsbewegung über oder durch die Teleskopstangen an die ISOFIX-Adapter 3 übertragen wird.

Wenngleich in den hier angeführten Ausführungsbeispielen sämtliche Bewegungen manuell eingeleitet werden, versteht es sich, dass eine oder mehrere translatorische und/oder rotatorische Bewegungen einzelner Bestandteile der Vorrichtung relativ zueinander grundsätzlich auch durch einen Antrieb, insbesondere einen oder mehrere Elektromotore, ausgeführt werden können.

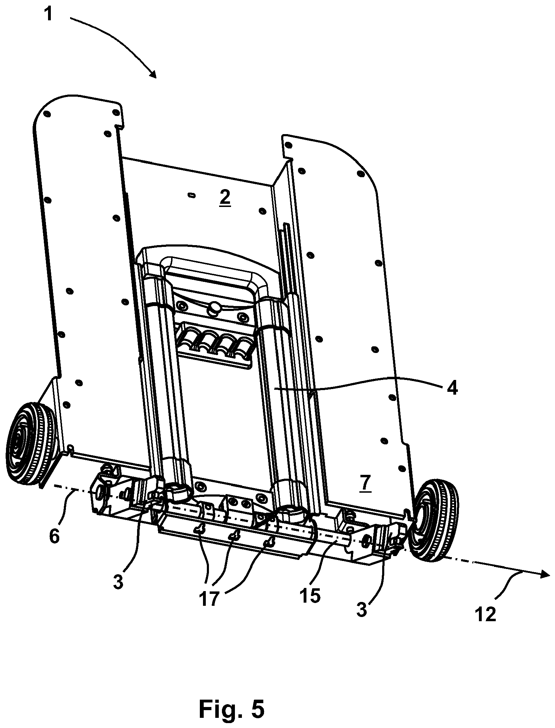

In Fig. 5 ist eine perspektivische Darstellung einer Untersicht der erfindungsgemäßen Vorrichtung 1 abgebildet. Dabei ist ersichtlich, dass die ISOFIX-Adapter 3 über ein Verbindungselement 15 verbunden sind, wobei das Verbindungselement 15 wiederum über die Betätigungseinrichtung 4 mit der Koppeleinrichtung 2 verbunden ist. Das Verbindungselement 15 ist in die zweite Richtung 12 relativ zur Koppeleinrichtung 2 bewegbar und entlang der zweiten Richtung 12 in unterschiedlichen Positionen arretierbar. Zur Arretierung sind im zweiten Element 14 bodenseitig mehrere, hier drei, etwa pfeilförmige Ausnehmungen 17 angeordnet, wobei am Verbindungselement 15 ein hier nicht dargestellter Zapfen angeordnet ist, welcher bei einer zweiten Winkelposition des Verbindungselementes 15 relativ zur Koppeleinrichtung, in welcher Längsachsen 10 der ISOFIX-Adapter 3 etwa parallel zur ersten Richtung 5 sind, aus der Ausnehmung 17 gedreht ist und entlang der zweiten Richtung 12 relativ zum zweiten Element 14 bewegbar ist. Der Zapfen greift jedoch dann, wenn sich die ISOFIX-Adapter 3 in einer in Fig. 5 dargestellten ersten Winkelposition befinden bzw. wenn sich die Vorrichtung in der Arbeitsposition befindet, derart in die Ausnehmung 17 ein, dass das Verbindungselement 15 nicht relativ zum zweiten Element 14 entlang der zweiten Richtung 12 bewegbar ist. Somit ist hier eine Arretierung des Verbindungselementes 15 und also auch der ISOFIX-Adapter 3 in drei unterschiedliche Relativpositionen entlang der zweiten Richtung 12 relativ zur Koppeleinrichtung 2 möglich, und zwar eine mittlere und zwei seitliche Positionen. Eine Lösung der Arretierung kann durch Rotation der ISOFIX-Adapter 3 um die Rotationsachse 6 durchgeführt werden, wodurch der Zapfen aus der Ausnehmung gedreht wird.

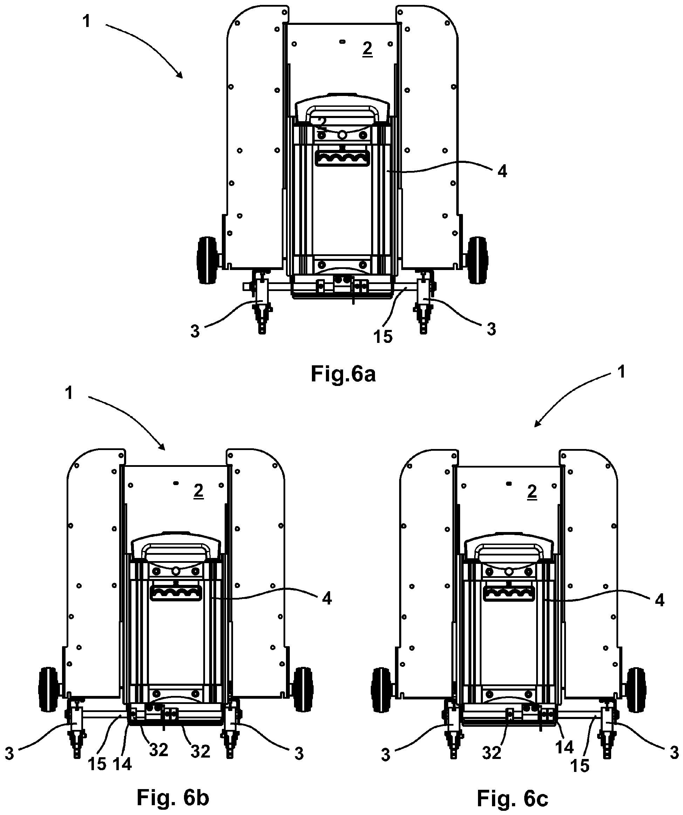

Fig. 6a zeigt eine Frontalansicht der erfindungsgemäßen Vorrichtung 1, wobei die ISOFIX-Adapter 3 in einer mittleren Position arretiert sind.

Fig. 6b und 6c zeigen zwei weitere Frontalansichten der erfindungsgemäßen Vorrichtung 1, wobei das Verbindungselement 15 mit den ISOFIX-Adaptern 3 in zwei verschiedenen seitlichen Positionen entlang der zweiten Richtung 12 relativ zur Koppeleinrichtung 2 arretiert dargestellt sind. Somit ist es mit der erfindungsgemäßen Vorrichtung 1 auf einfache Weise möglich, Gegenstände auch außermittig zu ISOFIX-Haltebügeln in einem Fahrzeug zu fixieren. Maximalpositionen sind hier durch Anschläge 32 definiert, welche am Verbindungselement 15 fix angeordnet und mit diesem verschiebbar sind und in einer Endposition entlang der zweiten Richtung 12 wie ersichtlich am zweiten Element 14 bzw. an im zweiten Element 14 angeordneten Verbindungsführungen 16 anliegen.

Die Betätigungseinrichtung 4 bleibt dabei mittels des Raststiftes 11 in einer Position entlang der ersten Richtung 5 relativ zur Koppeleinrichtung 2 fixiert, lediglich das Verbindungselement 15 sowie das zweite Übertragungselement 29 werden mit den ISOFIX-Adaptern 3 entlang der zweiten Richtung 12 verschoben, wodurch eine horizontale Positionierung der Koppeleinrichtung 2 und somit des zu fixierenden Gegenstandes relativ zu ISOFIX-Haltebügeln einer Fahrzeugkarosserie realisierbar ist.

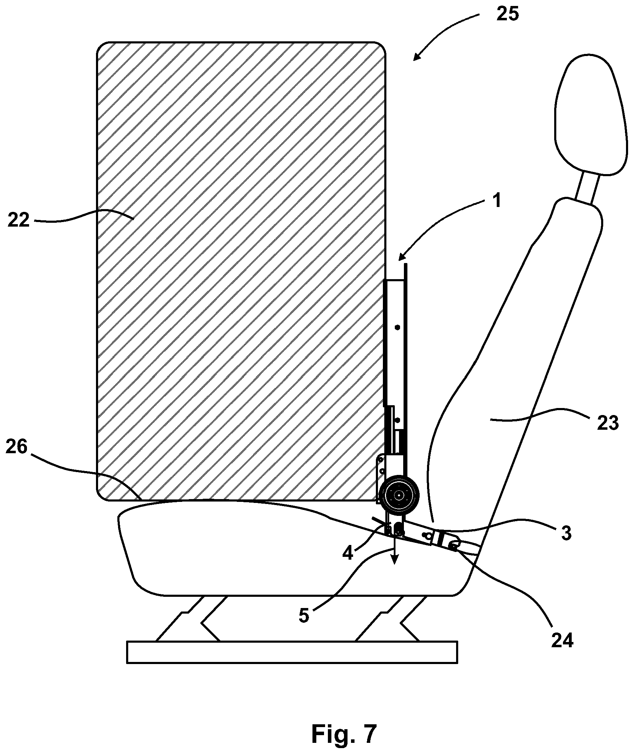

In Fig. 7 ist eine Seitenansicht eines Sets 25 abgebildet, welches an einem Sitz 23 eines Fahrzeuges montiert ist, wobei das Set 25 die erfindungsgemäße Vorrichtung 1 und eine Transporteinrichtung 22 aufweist. Die Transporteinrichtung 22 ist in diesem Ausführungsbeispiel als ein verschließbares Behältnis zum Transport von Gegenständen im Fahrzeug ausgebildet. Die ISOFIX-Adapter 3 befindenden sich wie ersichtlich in der Arbeitsposition und sind an korrespondierende ISOFIX-Haltebügel der Fahrzeugkarosserie angekoppelt. In Fig. 7 ist ersichtlich, dass durch Verschiebung der Betätigungseinrichtung 4 samt den ISOFIX-Adaptern 3 in die erste Richtung 5 ein Ausgleichen einer Schräge der Sitzfläche des Sitzes 23 des Fahrzeuges ermöglicht ist, um die Bodenfläche 26 der Transporteinrichtung 22 in eine horizontale und somit für den Transport günstige Lage einzurichten. Darüber hinaus ist eine drehbare Lagerung der ISOFIX-Adapter 3 für eine Einstellung einer günstigen Arbeitsposition von Vorteil, da die ISOFIX-Adapter 3 in der Arbeitsposition mit den Haltebügeln 24 der Fahrzeugkarosserie über die Betätigungseinrichtung 4 auf einfache und rasche Weise verbunden werden können.

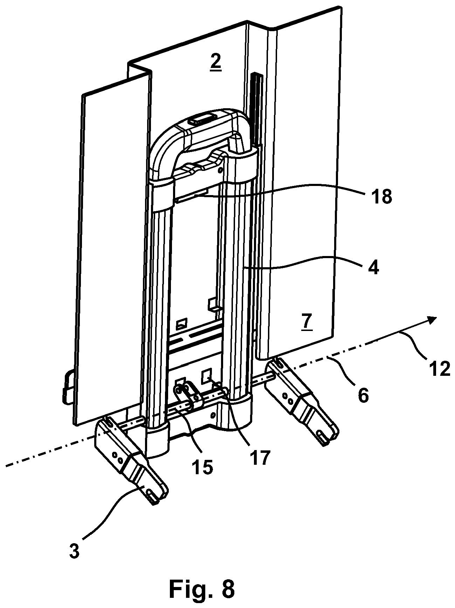

Fig. 8 stellt eine schematische, perspektivische Darstellung eines weiteren Ausführungsbeispiels der erfindungsgemäßen Vorrichtung 1 dar. Dabei ist ersichtlich, dass das Auslöseelement 18 im Unterschied zum Ausführungsbeispiel aus Fig.1 nicht als Griff, sondern als ein Taster ausgebildet ist, welcher an der Betätigungseinrichtung 4 angeordnet ist. Mit dem Taster können die ISOFIX-Adapter 3 wieder über ein Zugmittel von den Haltebügeln 24 der Fahrzeugkarosserie gelöst werden.

Weiter sind bei diesem Ausführungsbeispiel die Ausnehmungen 17 zur Arretierung des Verbindungselements 15 in unterschiedlichen Relativpositionen entlang der zweiten Richtung 12 nicht in einer bodenseitigen, sondern in einer rückseitigen Fläche des zweiten Elementes 14 angeordnet.

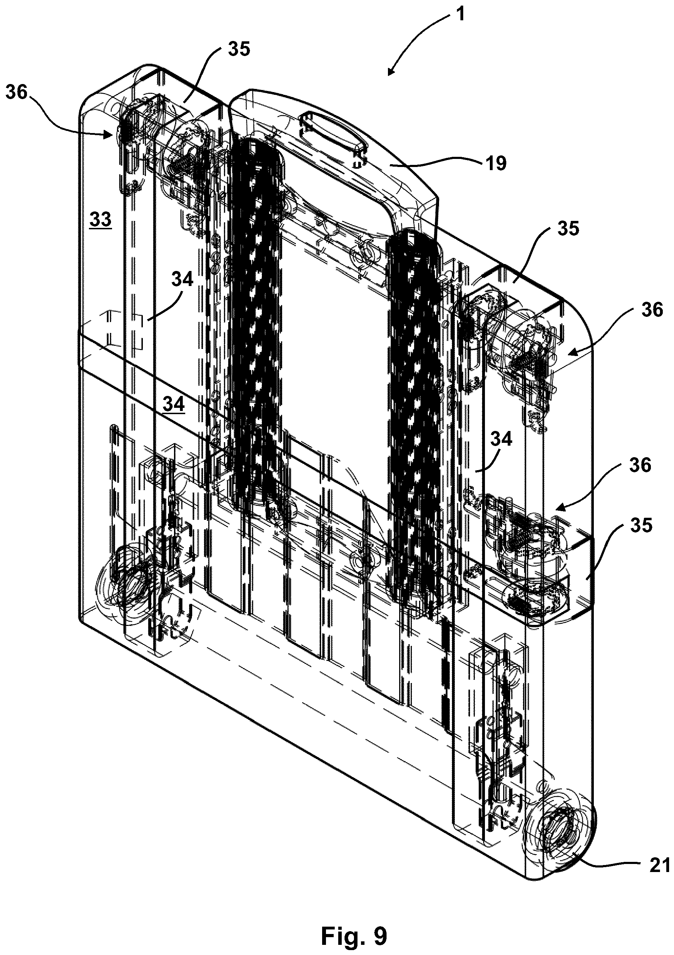

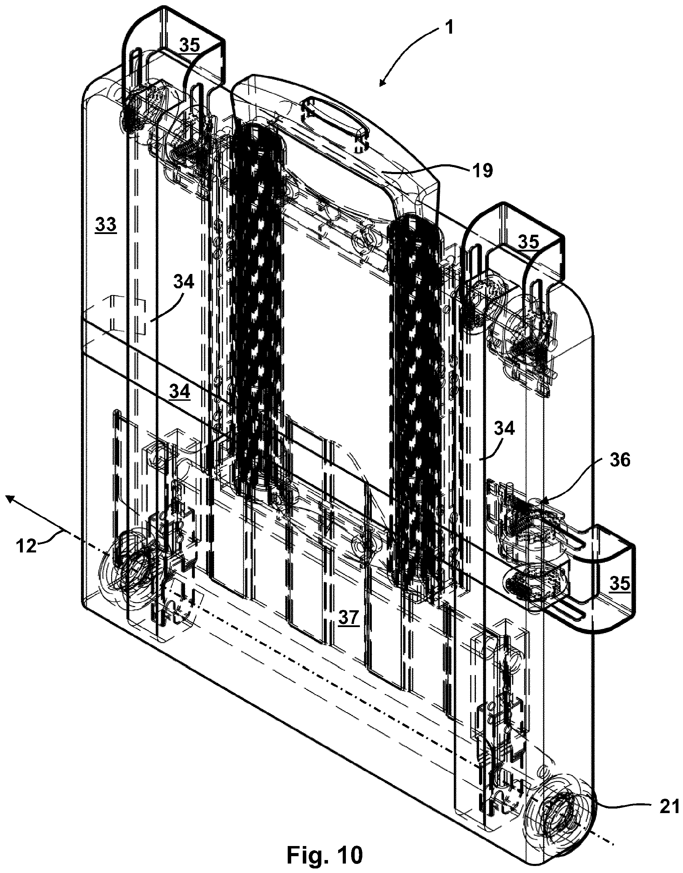

Fig. 9 und 10 zeigen ein weiteres Ausführungsbeispiel einer erfindungsgemäßen Vorrichtung 1 in perspektivischer Darstellung, wobei einzelne Bestandteile der Vorrichtung transparent dargestellt sind. Bei diesem Ausführungsbeispiel sind drei Gurte 34 vorgesehen, welche einerseits fix und andererseits über eine Spanneinrichtung, welche einen Aufrollmechanismus 36 und einen Gurtspannhebel 35 aufweist, spannbar mit der hier als Platte 33 ausgebildeten Koppeleinrichtung 3 verbunden sind, um einen zu transportierenden Gegenstand über die Gurte 34 an die Vorrichtung 1 zu spannen bzw. diesen Gegenstand kraftschlüssig mit der Vorrichtung 1 zu verbinden. Es versteht sich, dass die Vorrichtung 1 mit entsprechenden Gurten 34 auch einfach an einen Sitz 23 eines Fahrzeuges, welches beispielsweise ohne ISOFIX-Haltebügel ausgebildet ist, gespannt werden kann. Weiter kann die Vorrichtung 1 mit den Gurten 34 auch einfach im Fahrzeug, beispielsweise im Kofferraum, fixiert werden, wenn die Vorrichtung nicht benutzt wird. Dadurch sind Beschädigungen der Vorrichtung, welche bei einer losen Positionierung im Fahrzeug auftreten könnten, auf einfache Weise vermieden.

Die Vorrichtung 1 kann auch derart ausgebildet sein, dass ein oder mehrere Gurte 34 zur Fixierung von Gegenständen an der Vorrichtung 1 und ein oder mehrere Gurte 34 zur Fixierung der Vorrichtung 1 selbst an einem anderen Gegenstand wie einem Sitz 23 eines Kraftfahrzeuges oder in einem Kofferraum vorgesehen sind. Die Vorrichtung 1 kann dann beispielsweise samt einer Getränkekiste, welche mit der Vorrichtung 1 von einem Geschäft wie mit einem Trolley zum Fahrzeug gerollt werden kann, im Kofferraum oder einer anderen Position im Fahrzeug mittels der Gurte 34 fixiert werden, wobei auch die Getränkekiste an der Vorrichtung durch Gurte 34 fixiert sein kann.

Im dargestellten Ausführungsbeispiel sind zwei Gurte 34 vertikal und ein Gurt 34 horizontal an der Platte 33 angeordnet. Natürlich sind auch andere Anordnungen möglich.

Der Gurtspannhebel 35, mit welchem der Aufrollmechanismus 36 ähnlich einer Ratsche oder einem Gurtspanner betätigt werden kann, ist beim Ausführungsbeispiel in der Platte 33 versenkbar, um geringe Außenabmessungen der Vorrichtung 1 zu erreichen. Fig. 9 zeigt dabei einen Transportzustand, in welchem die einzelnen Gurtspannhebel 35 in Vertiefungen in der Platte 33 versenkt sind. Fig. 10 zeigt einen Arbeitszustand, in welchem die Gurtspannhebel 35 aus den Vertiefungen der Platte 33 gezogen sind und in welchem Arbeitszustand der Aufrollmechanismus 36 mit den Gurtspannhebeln 35 betätigbar ist, indem eine Rolle, auf welcher der Gurt 34 aufwickelbar ist, in einer Spannrotationsrichtung mit dem Gurtspannhebel 35 rotatorisch bewegbar ist, um den Gurt 34 zu spannen.

Zum Lösen des Gurtes 34 ist an der Spanneinrichtung ein Sperrelement, beispielsweise ein Schiebeelement, vorgesehen, mit welchem eine Rotation der Rolle wie bei einer Ratsche oder einem Gurtspanner entgegen der Spannrotationsrichtung ermöglicht und blockiert werden kann, um den Gurt 34 bei Bedarf spannen bzw. lösen zu können.

Weiter weist diese Vorrichtung 1 auch eine Schaufel 37 und bodenseitige Rollelemente 21 zum Transportieren von Gegenständen wie mit einem Trolley auf, welche Schaufel 37 um eine zur zweiten Richtung 12 vorzugsweise etwa parallele Achse schwenkbar und hier in einem zur Platte 33 angeschwenkten Zustand dargestellt ist.

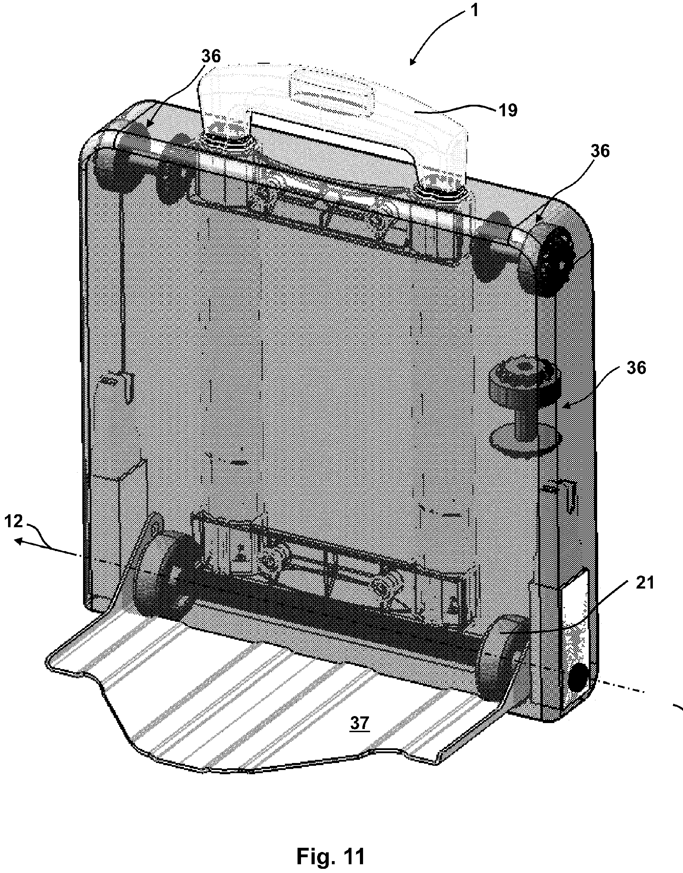

Fig. 11 zeigt eine erfindungsgemäße Vorrichtung 1 in teilweise transparenter Darstellung in isometrischer Ansicht. Wie ersichtlich sind hier drei Aufrollmechanismen 36 vorgesehen, welche in die auch hier als Platte 33 ausgebildete Koppeleinrichtung 2 integriert sind. Entsprechende Gurte 34 sind hier nicht dargestellt und können an einer den Aufrollmechanismen 36 gegenüberliegenden Seite der Platte 33 fix oder lösbar angeordnet sein. Weiter sind in die Platte 33 bodenseitige Rollelemente 21 integriert und ist auch hier eine Schaufel 37 vorgesehen, welche bevorzugt um eine zur zweiten Richtung 12 parallele Schwenkachse schwenkbar ist. Die Schaufel 37 ist hier in einem abgeschwenkten Zustand dargestellt, um mit der Vorrichtung 1 schwere Gegenstände wie beispielsweise eine Getränkekiste sowohl in einem Fahrzeug als auch außerhalb des Fahrzeuges mittels der bodenseitigen Rollen leicht transportieren zu können und die Vorrichtung 1 dennoch kompakt zu halten.

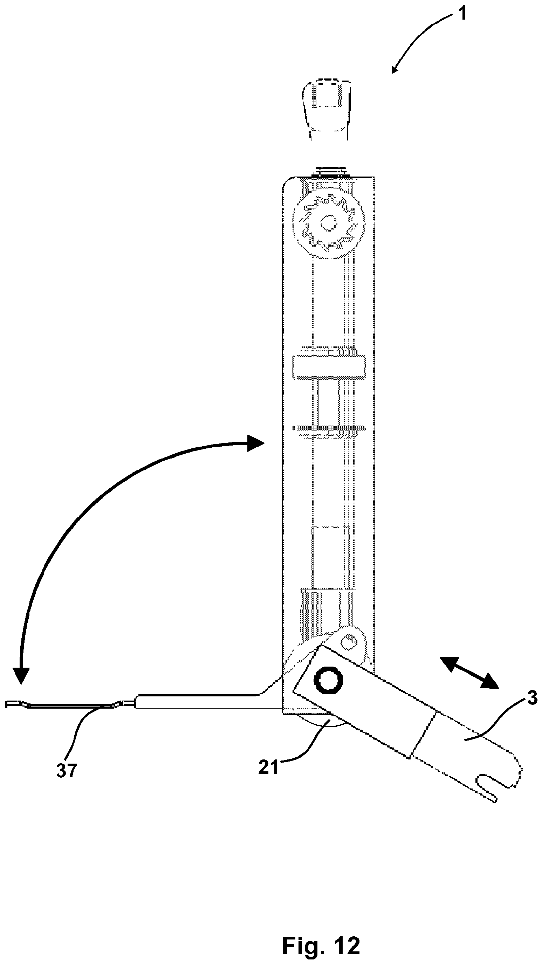

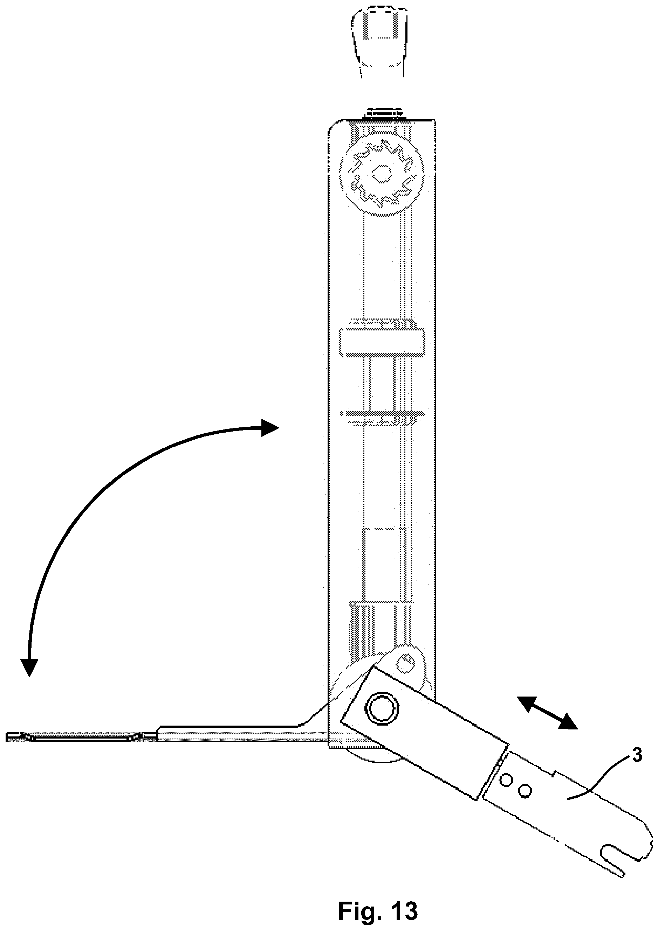

Fig. 12 und 13 zeigen eine erfindungsgemäße Vorrichtung 1 in Seitenansicht. Hier ist ebenfalls eine Schaufel 37 vorgesehen, welche in einem abgeschwenkten Zustand dargestellt ist, in welchem die Schaufel 37 beispielsweise an einem unteren Anschlag anliegen und zum Transport von zwischen der Schaufel 37 und der Platte 33 angeordneten Getränkekisten eingesetzt werden kann. Weiter ist hier ersichtlich, dass die ISOFIX-Adapter 3 aufweisenden Befestigungselemente in einer Länge variabel sind, sodass ein Abstand der ISOFIX-Adapter 3 von der als Platte 33 ausgebildeten Koppelvorrichtung veränderbar ist. Hierzu kann an den Befestigungselementen 3 beispielsweise ein Rastmechanismus vorgesehen sein.

Mit der erfindungsgemäßen Vorrichtung 1 können verschiedenartige Gegenstände, Kinder in Kindersitzen, aber auch Tiere sicher und verletzungsfrei in einem Fahrzeug transportiert werden. Dies wird mittels einer beweglich mit einer Koppeleinrichtung 2 verbundenen Betätigungseinrichtung 4 und mit mit der Betätigungseinrichtung 4 beweglich verbundenen Befestigungselementen auf einfache und platzsparende Weise erreicht. Wenn die erfindungsgemäße Vorrichtung 1 nicht zur Koppelung einer Transporteinrichtung 22 mit der Fahrzeugkarosserie benötigt wird, ist es möglich, die ISOFIX-Adapter 3 auf einfache Weise hinter Führungen 7 in einer Transportposition durch Bewegung der Betätigungseinrichtung 4 platzsparend zu verstauen. Durch ein teleskopierbares Griffstück 19 und Gleit- oder Rollelemente 21 kann die Transporteinrichtung 22 auch außerhalb des Fahrzeuges einfach fortbewegt werden.

## Patentansprüche

1. Vorrichtung (1) zur Fixierung eines Gegenstandes, insbesondere eines Transportbehältnisses, in einem Fahrzeug, aufweisend eine Koppeleinrichtung (2), mit welcher der Gegenstand starr verbindbar ist, sowie zwei Befestigungselemente, welche als ISOFIX-Adapter (3) ausgebildet sind, mit welchen die Koppeleinrichtung (2) mit dem Fahrzeug verbindbar sind, wobei die Befestigungselemente mit einer Betätigungseinrichtung (4) verbunden und gemeinsam mit der Betätigungseinrichtung (4) in einer ersten Richtung (5) translatorisch relativ zur Koppeleinrichtung (2) bewegbar sind, wobei die Befestigungselemente mit der Betätigungseinrichtung (4) um eine Rotationsachse (6) drehbar verbunden sind, wobei die Rotationsachse (6) etwa senkrecht zur ersten Richtung (5) ist, **dadurch gekennzeichnet, dass** die Rotationsachse (6) relativ zur Koppeleinrichtung (2) entlang der ersten Richtung (5) translatorisch verschiebbar ist, wobei vorgesehen ist, dass die Koppeleinrichtung (2) Führungen (7) für die Befestigungselemente aufweist, wobei die Führungen (7) entlang der ersten Richtung (5) ausgerichtet sind, durch welche Führungen (7) ein Drehwinkel der Befestigungselemente um die Rotationsachse (6) festgelegt ist, wenn sich die Befestigungselemente in einer Transportposition befinden, wobei weiter vorgesehen ist, dass die Befestigungselemente in der Transportposition durch eine Feder (9) derart federbelastet sind, dass die Befestigungselemente (3) bei einem Verlassen der Führungen (7) in Richtung der ersten Richtung (5) durch die Feder (9) um die Rotationsachse (6) gedreht werden.

2. Vorrichtung (1) nach Anspruch 1, **dadurch gekennzeichnet, dass** die Befestigungselemente mittels einer translatorischen Bewegung der Betätigungseinrichtung (4) in die erste Richtung (5) und einer Drehbewegung der Befestigungselemente aus einer Transportposition in eine Arbeitsposition bewegbar sind, wobei die Befestigungselemente in der Arbeitsposition mit Haltebügeln (24) einer Fahrzeugkarosserie verbindbar sind.

3. Vorrichtung (1) nach Anspruch 1 oder 2, **dadurch gekennzeichnet, dass** die Betätigungseinrichtung (4) relativ zur Koppeleinrichtung (2) in unterschiedlichen Relativpositionen entlang der ersten Richtung (5) fixierbar ist, insbesondere mittels eines Raststiftes (11).

4. Vorrichtung (1) nach einem der Ansprüche 1 bis 3, **dadurch gekennzeichnet, dass** die Befestigungselemente relativ zur Koppeleinrichtung (2) in einer zweiten Richtung (12) translatorisch bewegbar sind, wobei die zweite Richtung (12) vorzugsweise senkrecht zur ersten Richtung (5) ist, wobei vorzugsweise vorgesehen ist, dass die Betätigungseinrichtung (4) ein erstes Element (13), welches starr mit der Koppeleinrichtung (2) verbunden ist, und ein zweites Element (14) aufweist, wobei das zweite Element (14) relativ zum ersten Element (13) entlang der ersten Richtung (5) bewegbar ist und die Befestigungselemente entlang der zweiten Richtung (12) bewegbar mit dem zweiten Element (14) verbunden sind, wobei bevorzugt vorgesehen ist, dass die Befestigungselemente über ein Verbindungselement (15) starr verbunden sind, wobei das Verbindungselement (15) in einer Verbindungsführung (16) im zweiten Element (14) geführt ist, wobei bevorzugt vorgesehen ist, dass das Verbindungselement (15) in der Verbindungsführung (16) um eine Rotationsachse (6) rotierbar ist, wobei die Rotationsachse (6) vorzugsweise parallel zur zweiten Richtung (12) ist, wobei bevorzugt vorgesehen ist, dass die Befestigungselemente relativ zum zweiten Element (14) in unterschiedlichen Positionen entlang der zweiten Richtung (12) lösbar arretierbar sind, wobei eine Arretierung insbesondere durch eine Rotation der Befestigungselemente um die Rotationsachse (6) lösbar ist.

5. Vorrichtung (1) nach einem der Ansprüche 1 bis 4, **dadurch gekennzeichnet, dass** die Befestigungselemente mit korrespondierenden Befestigungseinrichtungen im Fahrzeug, insbesondere ISOFIX-Haltebügeln (24), lösbar koppelbar sind, wobei eine Koppelung mittels der Betätigungseinrichtung (4) lösbar ist, wobei bevorzugt vorgesehen ist, dass die Koppelung mittels einer Betätigungsbewegung an der Betätigungseinrichtung (4), vorzugsweise über ein Auslöseelement (18), lösbar ist, wobei die Betätigungsbewegung bevorzugt über ein Zugmittel, insbesondere ein Seil (27), von der Betätigungseinrichtung (4) an die Befestigungselemente übertragbar ist, welches Zugmittel durch eine Rotationsachse (6) geführt ist, um welche die Befestigungselemente drehbar sind, sodass ein Lösen der Koppelung unabhängig von einem Winkel der Befestigungselemente um die Rotationsachse (6) möglich ist.

6. Vorrichtung (1) nach einem der Ansprüche 1 bis 5, **dadurch gekennzeichnet, dass** die Betätigungseinrichtung (4) ein Griffstück (19) aufweist, welches relativ zur Koppeleinrichtung (2) und relativ zu den Befestigungselementen bewegbar ist, vorzugsweise entlang der ersten Richtung (5), wobei das Griffstück (19) insbesondere über eine Teleskopstange (20) mit der Koppeleinrichtung (2) verbunden ist.

7. Vorrichtung (1) nach einem der Ansprüche 1 bis 6, **dadurch gekennzeichnet, dass** Roll- oder Gleitelemente (21) vorgesehen sind, vorzugsweise an einer Seite der Vorrichtung (1), welche einer Seite, an welche ein Griffstück (19) angeordnet ist, gegenüberliegt, um die Vorrichtung (1) rollend oder gleitend zu bewegen.

8. Vorrichtung (1) nach einem der Ansprüche 1 bis 7, **dadurch gekennzeichnet, dass** die Koppeleinrichtung (2) einen Gurt (34) samt einer Spannvorrichtung für den Gurt (34) aufweist, um einen Gegenstand mittels des Gurtes (34) auf einfache Weise an die Koppeleinrichtung (2) zu spannen.

9. Set zum Transport von Gegenständen im Fahrzeug, aufweisend eine Vorrichtung (1) nach einem der Ansprüche 1 bis 8 sowie eine Transporteinrichtung (22), welche starr mit der Vorrichtung (1) verbunden ist.

10. Set nach Anspruch 9, **dadurch gekennzeichnet, dass** die Transporteinrichtung (22) als ein Behältnis zum Transport eines Haustieres ausgebildet ist, wobei insbesondere innenseitig deformierbare Elemente angeordnet sind.

11. Set nach Anspruch 9, **dadurch gekennzeichnet, dass** die Transporteinrichtung (22) als Kindersitz ausgebildet ist.

12. Set nach einem Anspruch 11, **dadurch gekennzeichnet, dass** der Kindersitz eine klappbare Sitzfläche und klappbare Seitenelemente aufweist, sodass der Kindersitz auf kleinen Raum zusammenklappbar ist.

13. Set nach Anspruch 9, **dadurch gekennzeichnet, dass** die Transporteinrichtung (22) als verschließbares Transportbehältnis, insbesondere als Werkzeugkasten, als Laptoptasche oder Aktenkoffer, ausgebildet ist.

14. Set nach einem der Ansprüche 9 bis 13, **dadurch gekennzeichnet, dass** die Vorrichtung (1) und/oder die Transporteinrichtung (22) eine Lasche aufweist, durch welche die Transporteinrichtung (22) mittels eines Gurtes bei Anordnung in einem Fahrzeug zusätzlich sicherbar ist.

## Claims

1. A device (1) for fixing an object, in particular a transport container, in a vehicle, having a coupling means (2) to which the object can be rigidly connected, and two fastening elements in the form of ISOFIX adapters (3) with which the coupling means (2) can be connected to the vehicle, wherein the fastening elements are connected to an actuation means (4) and, together with the actuation means (4), are movable translationally in a first direction (5) relative to the coupling means (2), wherein the fastening elements are connected to the actuation means (4) rotatably about a rotational axis (6), wherein the rotational axis (6) is approximately perpendicular to the first direction (5), **characterised in that** the rotational axis (6) is displaceable translationally along the first direction (5) relative to the coupling means (2), wherein it is provided for the coupling means (2) to have guides (7) for the fastening elements, the guides (7) being oriented along the first direction (5), by means of which guides (7) a rotation angle of the fastening elements about the rotational axis (6) is defined when the fastening elements are in a transport position, wherein it is further provided for the fastening elements to be spring-loaded by a spring (9) when in the transport position such that the fastening elements (3) are rotated about the rotational axis (6) by the spring (9) on exiting the guides (7) in the direction of the first direction (5).

2. The device (1) according to Claim 1, **characterised in that** the fastening elements are movable in the first direction (5) by means of a translational movement of the actuation means (4) and out of a transport position into a working position by means of a rotational movement of the fastening elements, wherein the fastening elements can be connected to retaining clips (24) of a vehicle body when in the working position.

3. The device (1) according to Claim 1 or 2, **characterised in that** the actuation means (4) can be fixed, in particular by means of a latching pin (11), in different relative positions along the first direction (5) relative to the coupling means (2).

4. The device (1) according to one of Claims 1 to 3, **characterised in that** the fastening elements are movable translationally in a second direction (12) relative to the coupling means (2), wherein the second direction (12) is preferably perpendicular to the first direction (5), wherein it is preferably provided for the actuation means (4) to have a first element (13), which is connected rigidly to the coupling means (2), and a second element (14), wherein the second element (14) is movable along the first direction (5) relative to the first element (13), and the fastening elements are connected to the second element (14) movably along the second direction (12), wherein it is preferably provided for the fastening elements to be connected rigidly via a connecting element (15), wherein the connecting element (15) is guided in a connection guide (16) in the second element (14), wherein it is preferably provided for the connecting element (15) to be rotatable in the connection guide (16) about a rotational axis (6), wherein the rotational axis (6) is preferably parallel to the second direction (12), wherein it is preferably provided for the fastening elements to be releasably lockable in different positions along the second direction (12) relative to the second element (14), wherein locking can be released in particular by rotation of the fastening elements about the rotational axis (6).

5. The device (1) according to one of Claims 1 to 4, **characterised in that** the fastening elements can be coupled releasably to corresponding fasteners in the vehicle, in particular ISOFIX retaining clips (24), wherein coupling is releasable by means of the actuation means (4), wherein it is preferably provided for the coupling to be releasable by means of an actuation movement at the actuation means (4), preferably via a triggering element (18), wherein the actuation movement can preferably be transmitted via a pulling means, in particular a cable (27), from the actuation means (4) to the fastening elements, which pulling means runs through a rotational axis (6) about which the fastening elements are rotatable, so that the coupling can be released independently of an angle of the fastening elements about the rotational axis (6).

6. The device (1) according to one of Claims 1 to 5, **characterised in that** the actuation means (4) has a grip piece (19), which is movable, preferably along the first direction (5), relative to the coupling means (2) and relative to the fastening elements, wherein the grip piece (19) is connected to the coupling means (2) in particular via a telescopic rod (20).

7. The device (1) according to one of Claims 1 to 6, **characterised in that** rolling or sliding elements (21) are provided, preferably on a side of the device (1) opposite a side on which a grip piece (19) is arranged, in order to move the device (1) in a rolling or sliding manner.

8. The device (1) according to one of Claims 1 to 7, **characterised in that** the coupling means (2) has a belt (34) with a tensioning device for the belt (34) in order to brace an object against the coupling means (2) in a simple manner by means of the belt (34).

9. A kit for transporting objects in vehicles, having a device (1) according to one of Claims 1 to 8 and a transport means (22) which is connected rigidly to the device (1).

10. The kit according to Claim 9, **characterised in that** the transport means (22) is in the form of a container for transporting a pet, wherein in particular deformable elements are arranged on the inside.

11. The kit according to Claim 9, **characterised in that** the transport means (22) is in the form of a child seat.

12. The kit according to Claim 11, **characterised in that** the child seat has a foldable seat bottom and foldable side elements so that the child seat can be folded up in a small space.

13. The kit according to Claim 9, **characterised in that** the transport means (22) is in the form of a closable transport container, in particular a toolbox, laptop case or briefcase.

14. The kit according to one of Claims 9 to 13, **characterised in that** the device (1) and/or the transport means (22) has a lug by means of which the transport means (22) can be additionally secured by means of a belt when arranged in a vehicle.

## Revendications

1. Dispositif (1), destiné à fixer un objet, notamment un contenant de transport dans un véhicule, comportant un système d'accouplement (2), à l'aide duquel l'objet peut être raccordé de manière rigide, ainsi que deux éléments de fixation, lesquels sont conçus sous la forme d'adaptateurs ISOFIX (3), à l'aide desquels le système d'accouplement (2) est susceptible d'être raccordé sur le véhicule, les éléments de fixation étant raccordés avec un système d'actionnement (4) et conjointement avec le système d'actionnement (4) étant déplaçables en translation par rapport au système d'accouplement (2) dans une première direction (5), les éléments de fixation étant raccordés avec le système d'actionnement (4) de manière rotative autour d'un axe de rotation (6), l'axe de rotation (6) étant approximativement perpendiculaire à la première direction (5), **caractérisé en ce que** l'axe de rotation (6) est coulissant en translation par rapport au système d'accouplement (2) le long de la première direction (5), étant prévu que le système d'accouplement (2) comporte des guidages (7) pour les éléments de fixation, les guidages (7) étant orientés le long de la première direction (5), par lesquels guidages (7) un angle de rotation des éléments de fixation autour de l'axe de rotation (6) est déterminé, lorsque les éléments de fixation se trouvent dans une position de transport, étant prévu par ailleurs que dans la position de transport, les éléments de fixation soient contraints par ressort par un ressort (9) de telle sorte que lorsqu'ils quittent les guidages (7), les éléments de fixation (3) soient tournés en direction de la première direction (5) par le ressort (9) autour de l'axe de rotation (6).

2. Dispositif (1) selon la revendication 1, **caractérisé en ce que** les éléments de fixation sont déplaçables au moyen d'un déplacement en translation du système d'actionnement (4) dans la première direction (5) et d'un déplacement en rotation des éléments de fixation d'une position de transport dans une position de travail, dans la position de travail, les éléments de fixation étant susceptibles d'être raccordés avec des étriers de maintien (24) d'une carrosserie de véhicule.

3. Dispositif (1) selon la revendication 1 ou 2, **caractérisé en ce que** le système d'actionnement (4) est susceptible d'être fixé par rapport au système d'accouplement (2) dans différentes positions relatives le long de la première direction (5), notamment au moyen d'un ergot d'encliquetage (11).

4. Dispositif (1) selon l'une quelconque des revendications 1 à 3, **caractérisé en ce que** les éléments de fixation sont déplaçables en translation par rapport au système d'accouplement (2) dans une deuxième direction (12), la deuxième direction (12) étant de préférence perpendiculaire à la première direction (5), étant prévu de préférence que le système d'actionnement (4) comporte un premier élément (13), lequel est raccordé de manière rigide avec le système d'accouplement (2) et un deuxième élément (14), le deuxième élément (14) étant déplaçable par rapport au premier élément (13) le long de la première direction (5) et les éléments de fixation étant raccordés de manière déplaçable le long de la deuxième direction (12) avec le deuxième élément (14), étant prévu de préférence que les éléments de fixation soient raccordés de manière rigide par l'intermédiaire d'un élément de raccordement (15), l'élément de raccordement (15) étant guidé dans un guidage de raccordement (16) dans le deuxième élément (14), étant prévu de préférence que l'élément de raccordement (15) soit rotatif dans le guidage de raccordement (16) autour d'un axe de rotation (6), l'axe de rotation (6) étant de préférence parallèle à la deuxième direction (12), étant prévu de préférence que les éléments de fixation soient susceptibles d'être bloqués de manière désolidarisable par rapport au deuxième élément (14) dans différentes positions le long de la deuxième direction (12), un blocage étant désolidarisable par une rotation des éléments de fixation autour de l'axe de rotation (6).

5. Dispositif (1) selon l'une quelconque des revendications 1 à 4, **caractérisé en ce que** les éléments de fixation sont susceptibles d'être accouplés de manière désolidarisable avec des systèmes de fixation correspondants dans le véhicule, notamment avec des étriers de maintien ISOFIX (24), un accouplement au moyen du système d'actionnement (4) étant désolidarisable, étant prévu de préférence que l'accouplement soit désolidarisable au moyen d'un mouvement d'actionnement sur le système d'actionnement (4), de préférence par l'intermédiaire d'un élément déclencheur (18), le mouvement d'actionnement étant transmissible de préférence par l'intermédiaire d'un élément de traction, notamment un câble (27) par le système d'actionnement (4) sur les éléments de fixation, lequel moyen de traction est guidé à travers un axe de rotation (6) autour duquel les éléments de fixation sont rotatifs, de sorte qu'une désolidarisation de l'accouplement soit possible indépendamment d'un angle des éléments de fixation autour de l'axe de rotation (6).

6. Dispositif (1) selon l'une quelconque des revendications 1 à 5, **caractérisé en ce que** le système d'actionnement (4) comporte un poignée (19) laquelle est déplaçable par rapport au système d'accouplement (2) et par rapport aux éléments de fixation, de préférence le long de la première direction (5), la poignée (19) étant raccordée notamment par l'intermédiaire d'une barre télescopique (20) avec le système d'accouplement (2).

7. Dispositif (1) selon l'une quelconque des revendications 1 à 6, caractérisé en ce des éléments de roulement ou de glissement (21) sont prévus, de préférence sur un côté du dispositif (1), qui est opposé à un côté sur lequel est placée une poignée (19) pour déplacer le dispositif (1) en roulement ou en glissement.

8. Dispositif (1) selon l'une quelconque des revendications 1 à 7, **caractérisé en ce que** le système d'accouplement (2) comporte une sangle (34) avec un dispositif tendeur pour la sangle (34), pour tendre de manière simple un objet au moyen de la sangle (34) sur le système d'accouplement (2).

9. Kit, destiné à transporter des objets dans le véhicule, comportant un dispositif (1) selon l'une quelconque des revendications 1 à 8, ainsi qu'un système de transport (22), lequel est raccordé de manière rigide avec le dispositif (1).

10. Kit selon la revendication 9, **caractérisé en ce que** le système de transport (22) est conçu sous la forme d'un contenant destiné à transporter un animal domestique, notamment des éléments déformables étant placés sur la face intérieure.

11. Kit selon la revendication 9, **caractérisé en ce que** le système de transport (22) est conçu sous la forme d'un siège pour enfant.

12. Kit selon la revendication 11, **caractérisé en ce que** le siège pour enfant comporte une surface d'assise rabattable et des éléments latéraux rabattables, de sorte que le siège pour enfant puisse se rabattre pour un faible encombrement.

13. Kit selon la revendication 9, **caractérisé en ce que** le système de transport (22) est conçu sous la forme d'un contenant de transport fermable, notamment d'une caisse à outils, d'un sac pour ordinateur ou d'un porte-documents.

14. Kit selon l'une quelconque des revendications 9 à 13, **caractérisé en ce que** le dispositif (1) et / ou le système de transport (22) comporte une patte, par laquelle le système de transport (22) peut être sécurisé additionnellement lors du placement dans un véhicule.
